# EUROPEAN PATENT APPLICATION

(11) **EP 1 167 251 A1**
(43) Date of publication of application: **02.01.2002**
(21) Application number: 00907679.5
(22) Date of filing: 07.03.2000
(51) Int. Cl.: B65G 67/04, B65G 67/24, B60P 1/36

(54) **AUTOMATIC STORAGE SYSTEM, ESPECIALLY FOR VEHICLES**

(30) Priority: 08.03.1999 ES 9900503
(71) Applicant: Sanchez Gomez, Ginés, 28932 Mostoles (ES)
(72) Inventor: Sanchez Gomez, Ginés, 28932 Mostoles (ES)
(86) International application number: PCT/ES00/00082
(87) International publication number: WO 00/53518

(57) **Abstract**

The invention relates to a system for storing and handling merchandise that can be managed by a computer and carried in a vehicle. Said system enables totally automated loading and transfer and highly automated unloading. When used in vehicles, said system consists of a conveyor belt loader that rejects inadequate merchandise, superimposed conveyor belts, which can have a belt with several turns, elevator, merchandise pushing device, photoelectric cells, label scanners, and the necessary connections for a computer controlling said devices, in addition to a fixing system consisting of a inflatable elastic band.

## Description

The invention concerns a merchandise storage/manipulation system suitable for being computer-controlled and installed in a vehicle. The system enables wholly automatic loading and transferring, as well as quasi-automatic unloading.

The basic of the system is the airports luggage belts. But instead of be used for conveying the merchandise to the travelers they are used for conveying the cargo on other belts for their storage. The arms and the human eyes are changed by pushers, fotoelectric cells and tag readers for automating.

### BRIEF DESCRIPTION OF FIGURES

Fig. 1. Storage belt with an input and an output.

Fig. 2. Feed belt.

Fig. 3. General scheme of a storage system with single-level and multiple-level, with feed belts, an interconnection belt, interconnection elevators and storage belts.

Fig. 4. Input/output sharing a same location.

Fig. 5. Interconnection elevator.

Fig. 6. Employment of the system for vehicles stowage/unstacking, with a elevator and a pile of storage belts.

### GENERAL DESCRIPTION SYSTEM

### Storage belt

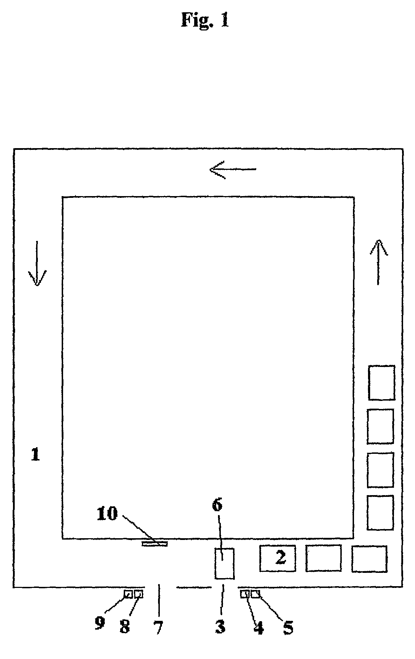

It is diagrammed in fig. 1

A circular conveyor belt (1.1) (i.e, a belt whose points always follow a periodic path, such as those used to transport luggage at airports) and barcode-tagged parcels (1.2); an intake (1.3), where merchandise enters the system, equipped with photoelectric cells (1.4) and tag readers (1.5); and an outlet (1.7), which may consist of a pusher and/or a ramp (1.10), also equipped with tag readers (1.8) and photoelectric cells (1.9).

Every time a parcel enters the belt when it is not in motion and there are not any other parcels on it, the storage system will be started by any of the following procedures or a combination of some of them: the parcel activates a switch (1.6); the parcel activates a photoelectric cell; or the parcel leaves the feed system (usually another belt or an elevator), which is detected -by a procedure that may be similar to the one to be described below- and transmitted to the storage system as a start order. The parcel (1.2) is carried on the belt (1.1) and passes first through a photoelectric cell (1.4) and then through the tag reader (1.5). The cell sends a signal to the computer both when it is switched on and off, which, however, will only be acknowledged if is confirmed by a 'correct reading' message from the tag reader. The computer then determines the belt length occupied by the parcel by a simple calculation: occupied length = time between cell's on and off signals x belt speed. The computer will allow more parcels to enter the system until the total belt length is covered.

In order to release a parcel out of the system, the computer will just order the belt to move until the parcel is detected by the tag reader (1.8) and the photoelectric cell (1.9) preceding the outlet. The following procedure is similar to that used at the intake- as the computer acknowledges that a parcel with a given barcode has passed entirely through the reader and the cell, it stops the belt and activates the pusher (1.10) to send the parcel out of the storage system.

As described, this system enables sequential storage and random recovery.

### Random storage and feed belt.

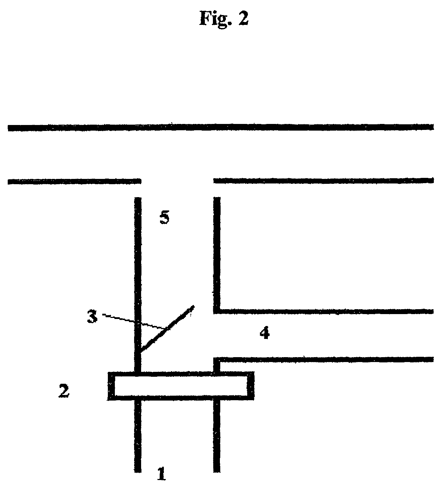

Random storage is also possible provided that a feed belt (it is diagrammed in fig. 2) suitable for measuring the length of the parcels -by means of a procedure similar to the one described above- is installed before the intake, and that a photoelectric cell is installed before the storage belt's intake. The computer orders the belt to rotate until the above-mentioned cell detects a free space with a length equal to that of the parcel to be stored. Then it stops the belt and starts a storage procedure similar to the one described above. The feed belt must be provided with a divertor (2.3) and an auxiliary belt (2.4) for the rejected merchandise. This auxiliary belt must be perpendicular to the feed belt and parallel to a storage belt where all merchandise with a length not fit for the system is diverted (calculated upon the basis of the smallest turn radius of the conveyor belt's corners).

### Interconnection belt.

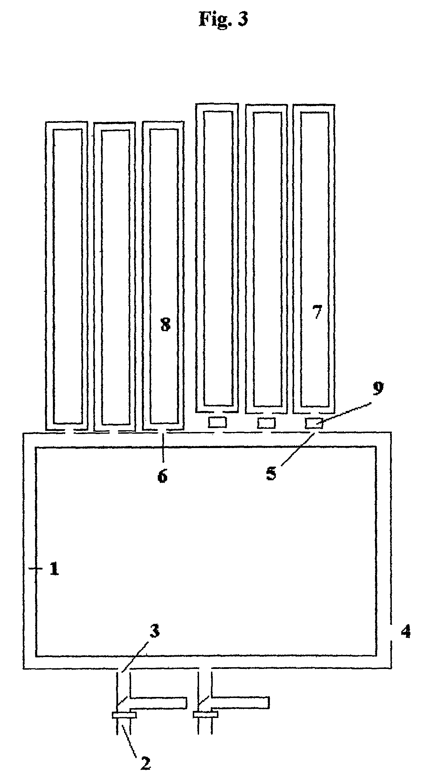

### See fig. 3

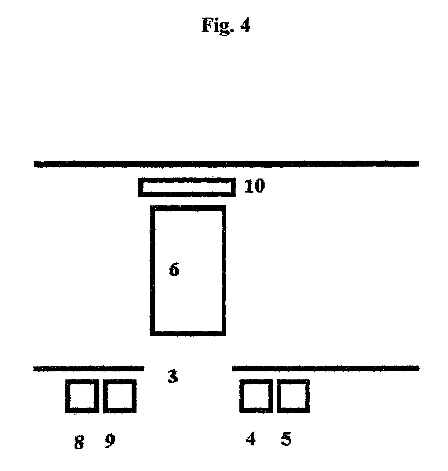

On the other hand, each belt (expressly suitable for inerconnection belts (3.1)), may be provided with several intakes and outlets (3.3, 3.4, 3.5, 3.6). An intake will be selected whenever a parcel passes through its switch, photoelectric cell, or activation system. Outlets will be selected or not selected by simply rendering them open or closed. Likewise, any access to a belt may be considered either intake or outlet (3.5, 3.6) provided that it is equipped with tag readers and photoelectric cells both before and after the free space (this kind of input/output is diagrammed in fig.4, whose references are the same that the fig. 1).

### Single-level and multiple-level storage.

It is diagrammed in fig. 3.

As described until now, this system would not be much useful at a warehouse, even if it were small, since the warehouse would have to be turned upside down every time a parcel had to be stored or removed. This could be improved by installing several belts (3.8), which would be fed and released by an auxiliary interconnection belt (3.1). This auxiliary belt would have a number of intakes/outlets equal to the number of storage belts (3.5, 3.6), plus one intake/outlet for the external communication (3.3, 3.4). The storage thus obtained would be a single-level storage.

The system can be further completed by multiple-level storage, i.e., by networks of belts, similar to the one described above, situated at several levels and interconnected by means of an elevator (3.7).

### Interconnection elevator.

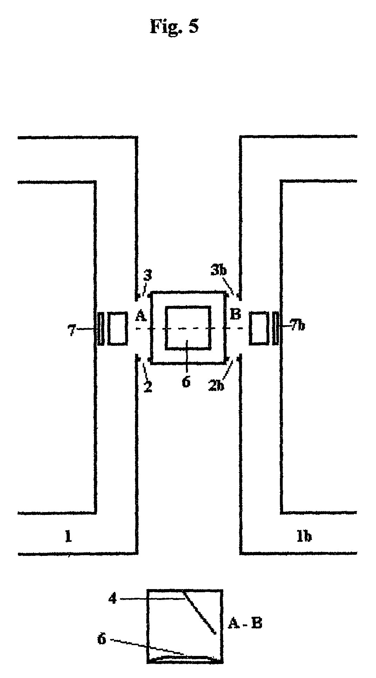

It is diagrammed in fig. 5.

This elevator should meet the following technical requirements: a vertical movement equivalent to that of the cyclical belts, i.e., ascending up to the top, then automatically inverting its path until the bottom is reached, and then, again to the top, cyclically; switches suitable for stopping the elevator (5.2, 5.2b) at the level of a belt (5.1, 5.1b) that has a free space or has to release a parcel; cargo detector in elevator (5.6) and pushers in the direction of the storage belts (5.4). Concerning the storage belts, they must be provided with sensors (5.3, 5.3b) in order to prevent any merchandise from being transferred to the elevator until it is empty.

The feed belt must be provided with photoelectric cells at the maximum clearance height of the elevator (2.2) (which is calculated from the space occupied by the elevator). Any parcel activating such clearance-height cells shall be diverted to the auxiliary belt (2.4). The system will also reject any parcel that exceeds the clearance width of the elevator or the smallest corner radius of the storage belts, and any parcel that cannot be given any free space into the storage belts. This last point is determined by the computer upon the basis of the different belt patterns stored after each input/output operation or after periodic tests, in which the belts are ordered to rotate and all free spaces are measured through the photoelectric cells.

The procedure for multiple-level storage (elevator storage) can be described as follows: a certain parcel is measured and taken to the elevator (in principle, at any level) by a feed belt (5.1) (maybe, with the help of a pusher (5.7)). The computer activates the switch (5.2b) of a belt with enough free space for the merchandise. The elevator then continues to ascend/descend until it comes across the corresponding switch (5.2b), which will stop the elevator and will automatically activate the pusher (5.4) responsible for depositing the parcel on the belt (5. 1b).

The procedure for recovering merchandise can be described as follows: the storage belt activates its switch (5.2b), which will cause the elevator to stop as they come across each other if it is empty (5.3). Once the elevator has stopped, the belt deposits the merchandise on it. The elevator then continues to move up and down, until the stop detector (5.2) is activated. After this, the elevator will just push the merchandise on the interconnection belt (5.1).

### PREFERRED EMBODIMENT

The preferred embodiment for this invention consists in the application of the system to a vehicle.

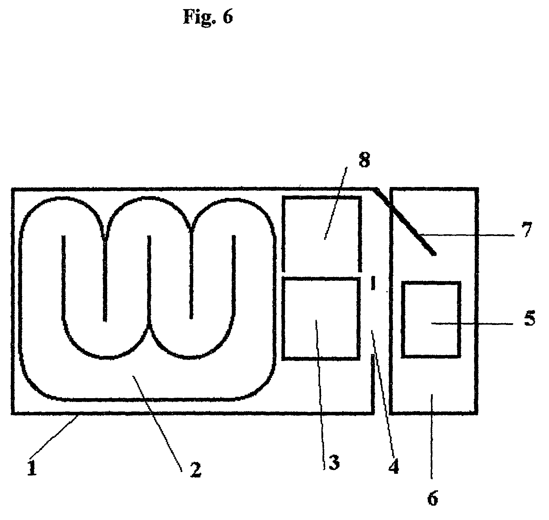

A general overview of this preferred embodiment is illustrated in FIG. 6, which shows a lengthwise section of a lorry's body, in which: (6.1) depicts the lorry's body, with only one practicable door at its rear part; (6.2) depicts the storage belt, which has a sinuous shape in order to increase its loading capacity; (6.3) depicts the elevator; (6.4) depicts the elevator's feed trapdoor, installed at the blind door; (6.5) and (6.6) depict uplift trapdoors, which may be installed at the vehicle and constitute a reflection of the feed trapdoor; (6.7) depicts the rear door, from where merchandise is released; and (6.8) depicts the unloading cage, which either must be open at one its sides or must be suitable for being open by means of a folding or detachable side.

It is the feed trapdoor (6.4) that feeds the vehicle, either manually- parcel by parcel, or automatically- through a feed belt coming from the main warehouse, or through a common belt coming from another vehicle. During this operation, the vehicle can be closed, even with the uplift trapdoor. The elevator is used to unload the vehicle by depositing the parcels into the unloading cage. Once this cage is filled up, the driver removes it from the lorry and delivers it to the customer, which, in return, brings back a previously used empty cage.

The procedure for recovering merchandise with the elevator will modify according to the next: the storage belt activates its switch, which will cause the elevator to stop as they come across each other. Once the elevator has stopped, the belt deposits the merchandise on it. The elevator then continues to move up and down, until the stop detector (it replaces to the switch stop 5.2) is activated, being a sonar. After this, the elevator will just push the merchandise into the cage. Whenever the elevator's platform stands above the merchandise already deposited into the cage, the length considered will equal the width of the cage; otherwise, the length considered will be inferior thereto. Thus, the system will only contemplate any of these two states. Whenever one of these states is turned into the other, the merchandise will be immediately rejected.

The storage belts must be enclosed and provided, at its top and/or its sides, with protective pads made of rubber or any other elastic, watertight, and resistant material whatsoever. Such pads must be air-inflatable, so that they can fasten the merchandise against the belt when the vehicle is in motion. On the other hand, the features of these belts as storage elements have already been deeply described and, therefore, require no further explanation.

### INDUSTRIAL APPLICATIONS

This system enables to use a single warehouse for the entire distribution of merchandise to final customers, both at the self-sale and at the sale by order formats. Thus, if we equip a fleet of light and heavy lorries with this system, we will be able to keep the light lorries away from the warehouse for long periods -even permanently-, since they may be supplied "en route" at any safe service area, where the merchandise would just be transferred through a conveyor belt, which may be protected, from one lorry to the other. This transfer operation would be, otherwise, computer-controlled.

## Claims

1. A warehouse, suitable for being computer-controlled, that enables both the storage and the recovery of merchandise previously stowed in barcode-tagged parcels. The storage system of the warehouse is **characterised in** being performed by means of cyclical conveyor belts, (1.1) equipped with an intake device (1.3) and with an outlet device (1.7), and connected among each other by means either of interconnection belts (3.1) or interconnection elevators (3.9). The interconnection belts and elevators (3.1, 3.9) connect to the intake of the warehouse either directly or by means of feed belts (3.2), and to the outlet, directly.

2. A warehouse according to Claim 1 **characterised in that** it comprises one or several interconnection cyclical belts, each of them comprising at least as many intakes and/or outlets (3.3, 3.4, 3.5, 3.6) as storage belts it is to connect, plus one intake/outlet for its connection to the outside or to any other interconnection devices.

3. A warehouse according to Claim 1 **characterised in that** it comprises one or several interconnection elevators, each of them comprising one platform and the corresponding elevation and stop components, programmed to perform a continuous upwards-downwards movement. The elevators are open at any sides whereby merchandise is to enter or leave and comprise one load detector (5.6) -such as a weight spring-, pushers (5.4), wipers corresponding with switches for the flip-flops (5.2, 5.2b) of the intake and outlet devices, and lock deactivators (5.3, 5.3b) for the outlet devices.

4. A warehouse according to Claim 1 **characterised in that** it comprises one or several feed belts, each of them being a non-cyclical conveyor belt connected, at one of its ends, to an intake (2.1) and, at the other end, to an outlet (2.5). Each feed belt is equipped, in its middle part, with clearance gauge devices (2.2) -such as sonars or photoelectric cells-, with one divertor (2.3), with one auxiliary belt for rejected merchandise (2.4) running perpendicular to the feed belt, as well as with one intake lock, controlled by flip-flops located at the intake and the outlets.

5. A warehouse according to Claims 1, 2, 3, and 4 **characterised in that** it comprises one or several intake devices for the merchandise entering the belts. Each belt comprises the actual intake (1.3), an incoming-parcel detector (1.6) activating the belt -such as a switch to be activated by the parcels as they go in, a photoelectric cell, or a switch connected to the preceding feed device and to be activated every time a parcel is transferred-, a photoelectric cell located immediately after the intake (1.4), and a tag reader (1.5), placed after the photoelectric cell.
Every time a belt is to receive merchandise from an elevator, its intake flip-flop (5.2, 5.2b) will inform the elevator by means of a switch -such as wipers or infrared rays- to be activated as it comes up or down.

6. A warehouse according to Claims 1, 2, 3, and 4 **characterised in that** it comprises one or several outlet devices for the merchandise to leave the belts. Each outlet device comprises one pusher (1.10) or ramp for releasing the merchandise, preceded by one tag reader (1.8) and by one photoelectric cell (1.9), as well as one blockage detector -such as a sonar-.
In case merchandise is to be released to an elevator, a lock system will prevent the pusher or the ramp from being activated until the platform of the elevator is in position (5.3, 5.3b). This lock system consists of a simple switch being activated whenever the platform touches it and of a sensor informing the elevator to stop (5.2, 5.2b) -this may be a flip-flop being activated whenever the merchandise is ready to leave the belt and connected to the platform with wipers or infrared rays as it comes up or down-. In this case, no blockage detector would be needed.

7. A warehouse according to Claims 5 and 6 **characterised in that** it comprises one or several merchandise intake/outlet devices. Each intake/outlet device comprises one intake and one outlet, both of them sharing a common space, whose components are arranged as follows: outlet's photoelectric cell (4.8) and tag reader (4.9), free space (4.3) -including an entry detector (4.6), a pusher (4.10) or any other release device, and either a blockage detector or a sensor, as applicable-, and intake's photoelectric cell (4.4) and tag reader (4.5).

8. A method for the intake of merchandise on storage, interconnection, or feed belts according to Claims 1, 2, 3, 4, 5, and 7. It is **characterised in** the following: the incoming-parcel detector (1.6) detects the merchandise and starts the belt; then, the intake's photoelectric cell (1.4) detects the incoming merchandise and registers a time-input on the computer; once the merchandise has gone through the cell, a new time-input signal is sent to the computer; as the tag reader registers a valid reading, it stops the belt, and the computer registers the entry and storage of a parcel and assigns a storage length to the parcel equal to the difference between both time-entries multiplied by the belt's speed.
In case the belt is to receive merchandise from an elevator, the intake flip-flops will be previously activated (5.2, 5.2b).

9. A method for the release of merchandise from storage, interconnection, or feed belts according to Claims 1, 2, 3, 4, 6, and 7. It is **characterised in** the following: the belt starts, and moves until the parcel in question passes through the outlet's photoelectric cell (1.9) and tag reader (1.8). Once the tag reader detects the parcel in question and the photoelectric cell remains no longer active, the belt will stop.
In case the outlet connects to other belt, the pusher (1.10) will be started when the blockage detector does not detect anything.
In case the outlet leads to an elevator, the lock flip-flop (5.2, 5.2b) will remain active until the elevator touches the pusher's lock deactivator (5.3, 5.3b). Then, the pusher will start, and the merchandise will be released to the elevator.

10. A method for the release of merchandise onto interconnection elevators according to Claims 1, 3, 5, 6, 7, and 9. It is **characterised in** the following:
The load detector (5.6) not being active, the elevator will stop at the first active outlet flip-flop (5.2). Then, the belt pusher is unlocked (5.3, 5.3b), and the outlet's pusher (1.10) releases the merchandise onto the elevator.

11. A method for the release of merchandise from interconnection elevators according to Claims 1, 3, 5, 6, 7, and 8. It is **characterised in** the following: the load detector (5.6) being active, the elevator will stop at the first active intake flip-flop (5.2b). Then, the pusher (5.4) starts and releases the merchandise from the elevator.

12. A method for the rejection of inadequately sized merchandise from feed belts according to Claim 4. It is **characterised in** the following: the intake (2.1) will remain locked until the normal outlet (2.5) or the rejection belt (2.4) are not started. The clearance gauge devices (2.2) detect any parcel whose width and height exceed certain values. The parcel's length is measured by the intake photoelectric cell, according to the method described in Claim 8. Every time the clearance gauge devices or the computer detect a length exceeding the allowed values, the divertor (2.3) will be activated, and the merchandise in question will be released onto the perpendicular auxiliary belt (2.4).

13. Employment of the warehouse type described in the Claims numbers 1 to 7 for vehicles stowage/unstacking for barcode tagged parcels. It is **characterized by** be installed in a vehicle with the next special configuration:
The stowage/unstacking system comprises several storage belts (6.2), an elevator (6.3), free space for an unloading cage (6.8) at the rear part, a feed trapdoor (6.5) to gain access to the elevator, and a door to gain access to the cage (6.7).
The storage belts: must be enclosed at their tops and sides; must be arranged sinuously, so that the whole area of the lorry's body (6.1), but some space at the rear part for the elevator (6.3) and the cage (6.8), is occupied; and must be provided at their tops and/or sides with air-inflatable rubber (or any similar material whatsoever) pads responsible for fastening and securing the merchandise against the belt.
The elevator must be open at three of its sides: the side facing the feed trapdoor, at the rear part of the vehicle; the front side, which leads to the belts; and the side facing the unloading cage. The elevator must also be provided with pushers, in the direction both of the belts and of the cage, and with a stop detector comprising a sonar with two possible states: cage-empty and cage-full. Any change in these states will activate the pusher facing the cage.
The merchandise enters the system through the feed trapdoor (6.5), either manually, parcel by parcel, or automatically, by means of a feed belt connected with another vehicle or warehouse.
The merchandise is released to the unloading cage (6.8), which is manually removed from the vehicle and delivered to the customer, and may be replaced by a previously used empty cage.

14. Employment of the warehouse type described in the Claim number 8 for the stowage/unstacking for barcode tagged parcels in vehicles, It is **characterized** because the unloading cage is substituted for a collapsible feed belt suitable for the connection with the feed trapdoor of a vehicle equipped with the system of claim 2. This system does not require any merchandise rejection mechanism, since this application does not consider the installation of any intermediate warehouse.

15. Employment of the warehouse types described in the Claims numbers 8 and 9 for the distribution from a main warehouse to all customers from a large expanse based on the combined use of light (those under claim 8) and heavy vehicles (those under claim 9).
Light vehicles may be supplied either from a warehouse equipped with a feed belt comprising a divertor adjusted to the dimensions of the vehicle's inner storage system, or from a heavy vehicle. In this case, the heavy vehicle will be considered a "mobile" warehouse, responsible for supplying the light vehicles belonging to remote areas.
Heavy vehicles must always be loaded from a warehouse and through feed belts adjusted to the dimensions of the light vehicles' storage systems.
